# EUROPEAN PATENT APPLICATION

(11) **EP 4 789 862 A1**
(43) Date of publication of application: **12.08.2026**
(21) Application number: 23955014.8
(22) Date of filing: 30.10.2023
(51) Int. Cl.: B32B 5/26, G06F 30/20

(54) **TEXTILE SYSTEM CAPABLE OF MAINTAINING OPTIMAL TEMPERATURE**

(71) Applicant: Chichampe Fabrics Inc., New Taipei City, Taiwan 234643 (TW)
(72) Inventor: CAI, Qionghua, New Taipei City, Taiwan 234643 (TW); XU, Xiumei, New Taipei City, Taiwan 234643 (TW)
(74) Representative: Vogelbruch, Keang
(86) International application number: PCT/CN2023/127843
(87) International publication number: WO 2025/091168

(57) **Abstract**

An optimal temperature regulating textile system includes a target effect establishment module and a product design module, the product design module includes a thermal insulation layer, a phase change fiber layer structure design module and a product type design module, the thermal insulation layer and the phase change fiber layer structure design module are used to perform at least one parameter design for the thermal insulation layer and the phase change fiber layer, the product type design module is used to combine the design of the thermal insulation layer and the phase change fiber layer structure design module with at least one layer of ancillary material.

## Description

### Technical Field

The present disclosure relates to the technical field of textile systems, and particularly relates to an optimal temperature regulating textile system.

### Description of the Related Art

Traditional heating and cooling products (such as heating and cooling quilts) are constructed by combining cool and warm materials on both sides of the products respectively, so that when the skin is into contact with either one of the materials, there is an instantaneous cooling or warming sensation, but these products generally comes without a temperature regulating function. As a result, after a period of use, the body temperature of users will cause the temperature of the contact surface to rise and become overheated. On the other hand, the new generation of temperature-regulating textiles, which may contain phase change materials, do not have a thermal insulation layer to block the external temperature, so the phase change materials are forced to interact with the internal and external temperatures simultaneously, and are unable to regulate the internal temperature effectively. As disclosed in U.S. Patent No. 9920455B2 entitled "Cellulosic fibers having enhanced reversible thermal properties and methods of forming thereof, a cellulose fiber includes a fiber body, including a cellulosic material and a non-encapsulated phase change material dispersed within the cellulosic material. The non-capsule phase change material forms a plurality of distinct domains dispersed within the cellulose material. The cellulose fiber provides thermal regulations based on at least one of adsorption and release of latent heat at transition temperature. However, it is only a fiber phase change material without the combined structure of the change material and the non-phase change material.

In view of this, how to combine textile fibers with different materials, focus on the temperature regulation requirements and characteristics of the target products, complete the structural design of the textile materials that can be applied to the products through different fiber combinations, arrangements, and number of layers, etc., and apply the structural design to the product, and ultimately complete the optimal temperature regulating textile structure and its application, is an urgent problem to be solved by the manufacturers of the related industry.

### SUMMARY OF THE DISCLOSURE

In view of the above textile's inability to effectively regulate its internal temperature, the present disclosure proposes an optimal temperature regulating textile system that adopts the following technical solution:
The present disclosure provides an optimal temperature regulating textile system, including a target effect establishment module and a product design module, the target effect establishment module is used to provide at least one condition for the target effect, the product design module selects at least one kind of fiber materials according to the at least one condition of the target effect to produce an optimal temperature regulation fiber material combination structure; wherein the at least one condition of the target effect includes regulating a target temperature, an effect duration, and applied product and scenario; the product design module includes a thermal insulation layer, a phase change fiber layer structure design module and a product type design module, the thermal insulation layer and the phase change fiber layer structure design module are used to perform at least one parameter design for the thermal insulation layer and the phase change fiber layer, the parameter includes a mutual arrangement order, a structure or a thickness of the thermal insulation layer and the phase change fiber layer, the product type design module is used to combine the design of the thermal insulation layer and the phase change fiber layer structure design module with at least one layer of ancillary material, and the ancillary material is a cooling fabric or warming fabric.

By adopting the aforementioned technical solution, the structural combination design of the thermal insulation layer and the phase change fiber layer selects fibers containing the corresponding appropriate phase change material as the temperature regulating layer material corresponding to the temperature requirement of the target effect, and calculates the number of phase change fibers required for the temperature regulating layer, the number of temperature regulating layers, and optimizes the thermal insulation layer according to the temperature regulating requirement of the target effect, thus completely isolating the external and internal temperature, and allowing the phase change temperature regulation energy to be effectively used in the internal temperature regulation, in order to ensure the continuous optimal temperature regulation.

Preferably, the optimal temperature regulation fiber material combination structure corresponding to the set, environment and scenario applied to the product type and corresponding to the products thereof includes home, clothing and office products as well as products used or worn in the scenarios.

Preferably, the thermal insulation layer used for keeping warm or cold includes a fiber, the fiber includes a polyester, wool or down; the phase change fiber layer is a temperature regulating layer used for performing endothermic and exothermic operations, it includes a phase change material, and the phase change material includes a grease and a paraffin.

By adopting the aforementioned technical solution, the present disclosure provides the combination structure and materials used in the product to achieve the target effect.

Preferably, the thermal insulation layer and the phase change fiber layer have a mutual arrangement order, of which the thermal insulation layer is on top, and the phase change fiber layer is on bottom.

Preferably, the thermal insulation layer and the phase change fiber layer have a mutual arrangement order, of which the phase change fiber layer is on top, and the thermal insulation layer is on bottom.

Preferably, the thermal insulation layer and the phase change fiber layer have a mutual arrangement order, of which one of the phase change fiber layers is arranged on the top and the bottom of the thermal insulation layer separately.

Preferably, the product type design module adds a layer of the ancillary material to the top of the design structure of the thermal insulation layer and the phase change fiber layer structure design module.

Preferably, the product type design module and the ancillary material are respectively and simultaneously added to the top and the bottom of the design structure of the thermal insulation layer and the phase change fiber layer structure design module.

By adopting the aforementioned technical solution, the present disclosure adjusts the materials of the thermal insulation layer and the phase change fiber layer according to the conditions of the actual target effect and design their mutual arrangement order, structure, and thickness to ensure the warming and cooling functions of the thermal insulation layer. The phase change fiber layer can perform endothermal or exothermal operations, produce an optimal temperature regulating material combination structure corresponding to the conditions of different target effects , and using the properties of the phase change fiber material to create an optimal temperature regulating material combination structure that can effectively maintain optimal temperature for a long time.

Preferably, the thermal insulation layer and the phase change fiber layer are designed within the range of 10-500gm/sqm.

In summation of the above, the present disclosure adopts the structural combination design of the thermal insulation layer and the phase change fiber layer, selects fibers containing the corresponding appropriate phase change material as the temperature regulating layer material corresponding to the temperature requirement of the target effect, and calculates the number of phase change fibers required for the temperature regulating layer, the number of temperature regulating layers, and optimizes the thermal insulation layer according to the temperature regulating requirement of the target effect, thus completely isolating the external and internal temperature, and allowing the phase change temperature regulation energy to be effectively used in the internal temperature regulation, in order to ensure the continuous optimal temperature regulation.

### BRIEF DESCRIPTION OF THE DRAWINGS

The accompanying drawings are included to provide a further understanding of the embodiments and are incorporated in this specification to form a part of the specification. The accompanying drawings are provided to illustrate embodiments and used in conjunction with the description to explain the principles of the present disclosure. Many of the anticipated advantages of other embodiments and the embodiments themselves will be readily recognized as they become better understood by reference to the following detailed description. The elements of the accompanying drawings are not necessarily drawn in scale relative to each other. The same labels in the drawings refer to corresponding similar or equivalent components.
FIG. 1 is a schematic view of an optimal temperature regulating textile system in accordance with an embodiment of the present disclosure;
FIG. 2 is a schematic view showing the mutual arrangement order of a thermal insulation layer and a phase change fiber layer in an optimal temperature regulating textile system of an embodiment of the present disclosure;
FIG. 3 a schematic view showing the mutual arrangement order of a thermal insulation layer and a phase change fiber layer in an optimal temperature regulating textile system of another embodiment of the present disclosure;
FIG. 4 a schematic view showing the mutual arrangement order of a thermal insulation layer, a phase change fiber layer, and an ancillary material in an optimal temperature regulating textile system of an embodiment of the present disclosure;
FIG. 5 a schematic view showing the mutual arrangement order of a thermal insulation layer, a phase change fiber layer, and an ancillary material in an optimal temperature regulating textile system of another embodiment of the present disclosure;
FIG. 6 a schematic view showing the mutual arrangement order of a thermal insulation layer, a phase change fiber layer, and an ancillary material in an optimal temperature regulating textile system of a further embodiment of the present disclosure;
FIG. 7 a schematic view showing the mutual arrangement order of a thermal insulation layer, a phase change fiber layer, and an ancillary material in an optimal temperature regulating textile system of another further embodiment of the present disclosure;
FIG. 8 a schematic view showing the mutual arrangement order of a thermal insulation layer, a phase change fiber layer, and an ancillary material in an optimal temperature regulating textile system of another further embodiment of the present disclosure; and
FIG. 9 is a verified data chart of an optimal temperature regulating textile system of the present disclosure.

### DESCRIPTION OF THE PREFERRED EMBODIMENTS

The objectives, technical contents and features of this disclosure will become apparent in the following detailed description of the preferred embodiments with reference to the accompanying drawings. It is noteworthy that the drawings used in the specification are only intended for illustrating the present disclosure, and may not represent the actual proportions and precise configurations after implementation of the present disclosure. Therefore, the proportions and configuration relationships of the accompanied drawings should not limit the scope of the present disclosure.

The present application is described in further detail below in connection with the accompanying drawings and embodiments. It is to be understood that the specific embodiments described herein are only for the purpose of explaining and illustrating the technical characteristics of the present disclosure, and are intended to limit the present disclosure. It is also to be noted that, for the sake of convenience of description, only the portions related to the relevant disclosure are shown in the accompanying drawings.

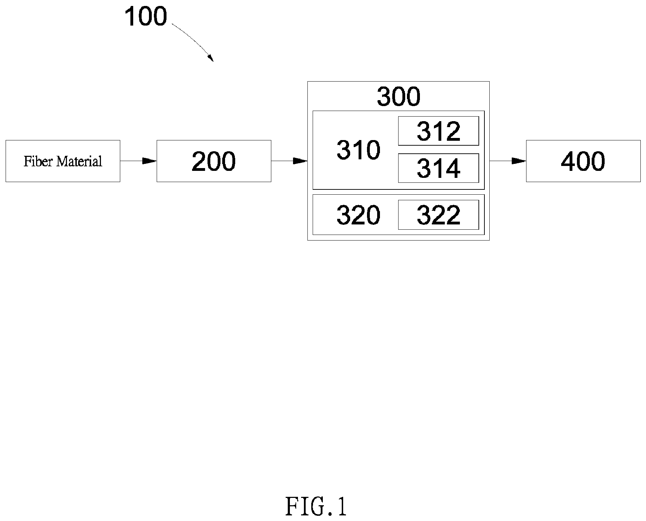

With reference to FIG. 1 for an optimal temperature regulating textile system in accordance with an embodiment of the present disclosure, the optimal temperature regulating textile system 100 includes a target effect establishment module 200 and a product design module 300, the target effect establishment module 200 is used to provide at least one condition of a target effect. The product design module 300 selects at least one kind of fiber materials according to the at least one condition of the target effect to produce an optimal temperature regulation fiber material combination structure 400; wherein the at least one condition of the target effect includes a target temperature regulation, an effect duration regulation of, and applied products and scenarios.

In detail, the target effect establishment module 200 is used to provide the aforementioned conditions of the target effect, and it is used as the basis for the design of the fiber assembly structure and the product type in the subsequent product design stages. Specifically, the target temperature regulation can be the regulation of human body temperature which is maintained within a specific temperature range, the effect duration regulation can be the continuous regulation of temperature up to a specific time, the applied product can be a long-sleeved shirt, the scenario of use can be the mountainous environment at a temperature below zero, and so on. The design of the target effect conditions is thus defined, and the eligible product design operation is then carried out.

In a specific embodiment, the fiber materials include wood pulp, cotton, silk, polyester, wool or down and other natural or non-natural fiber materials, which can be used in the subsequent construction of combination structures and products to achieve the target effect.

Further, the optimal temperature regulation fiber material combination structure 400 corresponding to the set, environment and scenario applied to the product type and corresponding to the products thereof includes home, clothing and office products as well as products used or worn in the scenarios. In a specific embodiment, the products of the optimal temperature regulating textile system 100 of the present disclosure include bedding, decorative material and clothing. In another specific embodiment, the products of the optimal temperature regulating textile system 100 of the present disclosure have an inner layer/outer layer design used in thermal insulation apparatuses. In a further specific embodiment, the products of the optimal temperature regulating textile system 100 of the present disclosure include the products that can be used in extreme environments.

The product design module 300 selects the fiber material according to the conditions of the target effect provided by the target effect establishment module 200 to design the optimal temperature regulating material combination structure, and the product type of the optimal temperature regulating material combination structure. The product design module 300 includes a thermal insulation layer, a phase change fiber layer structure design module 310 and a product type design module 320.

Further, the thermal insulation layer and the phase change fiber layer structure design module 310 are used for performing at least one parameter design of the thermal insulation layer 312 and the phase change fiber layer 314, the parameter includes a mutual arrangement order, structure or thickness of the thermal insulation layer and the phase change fiber layer, the product type design module 320 is used for combining the design of the thermal insulation layer and the phase change fiber layer structure design module 310 with at least one layer of ancillary material 322, and the ancillary material is a cooling fabric or a warming fabric.

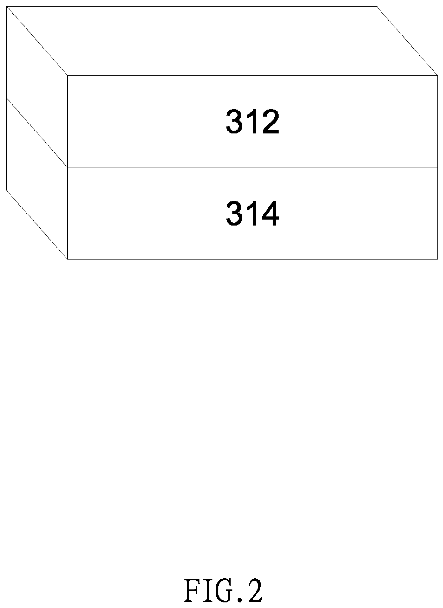

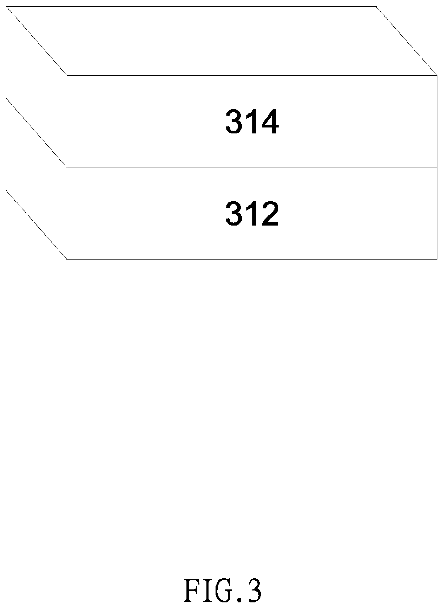

In detail, the thermal insulation layer and phase change fiber layer structure design module 310 refer to the modules that establish an optimal temperature regulating material combination structure through the thermal insulation layer 312, the phase change fiber layer 314 and different fiber material layers. In FIGS. 2 and 3, the thermal insulation layer and the phase change fiber layer structure design module 310 can design the mutual arrangement order, structure, and thickness of the thermal insulation layer 312 and the phase change fiber layer 314 according to the conditions of the target effect, and produce the optimal temperature regulating material combination structure corresponding to the conditions of different target effects, and at the same time use the properties of the phase change fiber material to create the optimal temperature regulating material combination structure that can be effectively maintained for a long time.

Wherein, the thermal insulation layer 312 in the structure used for the purpose of keeping warm or cold can be made of fibers including polyester, wool or down, and the phase change fiber layer 314 is a temperature regulating layer used for endothermic and exothermic operations. The phase change material used in phase change fiber layer 314 can be grease and paraffin. Specifically, the thermal insulation layer 312 and the phase change fiber layer 314 are designed within an optimal range of 10-500gm/sqm.

In a specific embodiment as shown in FIG. 2, the thermal insulation layer 312 and the phase change fiber layer 314 are arranged with a mutual arrangement order that the thermal insulation layer 312 is on top and the phase change fiber layer 314 is on bottom. In another specific embodiment as shown in FIG. 3, the thermal insulation layer 312 and the phase change fiber layer 314 are arranged with a mutual arrangement order that the phase change fiber layer 314 is on top and the thermal insulation layer 312 is on the bottom. In a further specific embodiment, the thermal insulation layer 312 and the phase change fiber layer 314 are arranged with a mutual arrangement order that a phase change fiber layer 314 is arranged on the top and the bottom of the thermal insulation layer 312 separately. FIGS. 2 and 3 are shown for the illustrative purpose only, and the actual material combination structure includes thickness, quantity, and arrangement order.

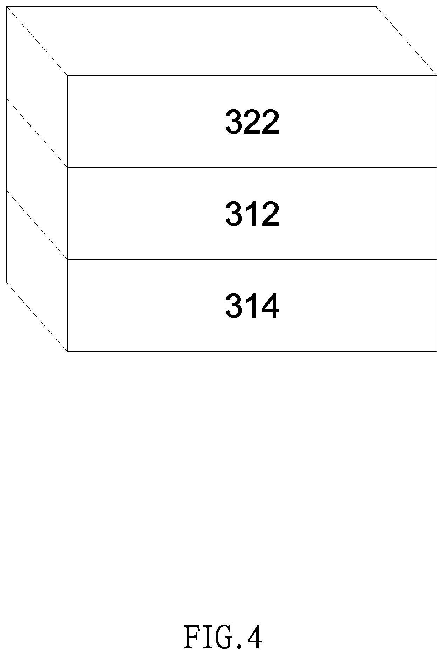

As shown in FIGS. 4 to 8, the product type design module 320 refers to the target effect conditions provided by the aforementioned target effect establishment module 200, and the optimal temperature regulating material combination structure design of the aforementioned thermal insulation layer and the phase change fiber layer structure design module 310, to combine with ancillary materials 322 and finally produce a temperature regulating product that can achieve the target effect. Specifically, the products include bedding, decorative materials, and clothing, the ancillary materials 322 can be cooling fabrics or warming fabrics, etc., the bedding can be quilts, pillows, mattresses, etc., the decorative materials can be curtains, insulation materials, etc., and the clothing can be inner wear, sportswear, etc.

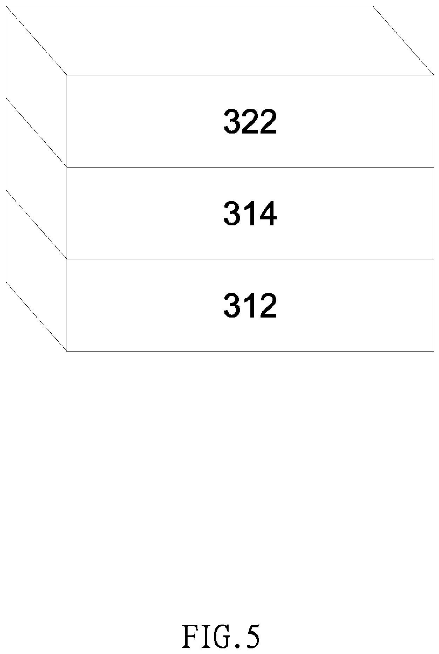

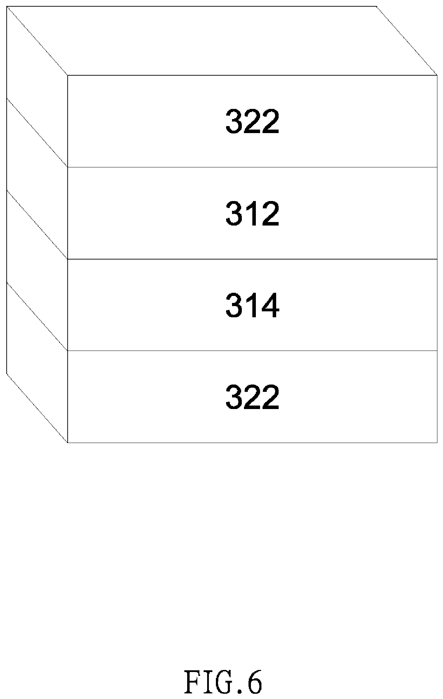

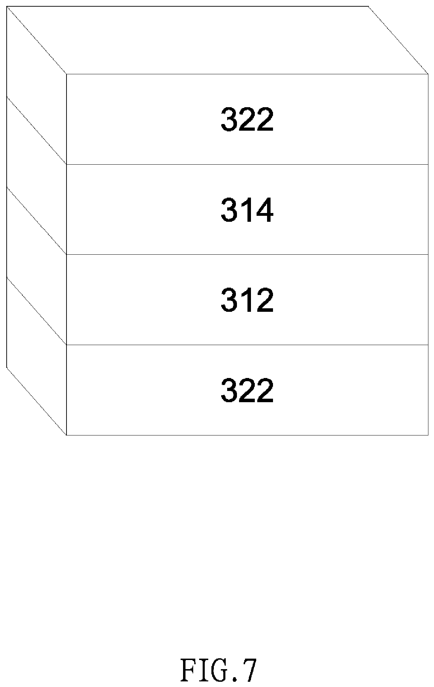

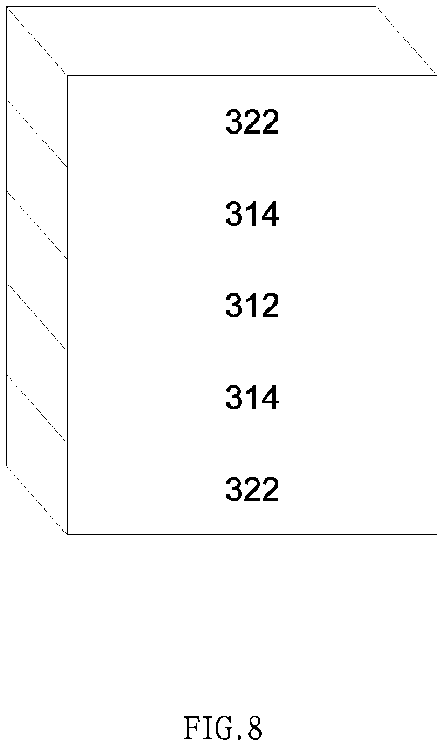

With reference to FIGS. 4 to 8 for the schematic views showing the mutual arrangement orders of the thermal insulation layer 312, the phase change fiber layer 314 and the ancillary material 322, the product type design module 320 combines the design of the optimal temperature regulating material combination structure in the thermal insulation layer and the phase change fiber layer structure design module 310 with the ancillary material 322. In a specific embodiment as shown in FIG. 4, the thermal insulation layer 312 is on top and the phase change fiber layer 314 is on bottom, and the product type design module 320 adds a layer of ancillary material 322 on top of this structure. In another specific embodiment as shown in FIG. 5, he phase change fiber layer 314 is on top and the thermal insulation layer 312 is on bottom, and the product type design module 320 further adds a layer of the ancillary material 322 on this structure. In a further specific embodiment as shown in FIG. 6, the thermal insulation layer 312 is on top and the phase change fiber layer 314 is on bottom, the product type design module 320 further adds the ancillary material 322 to the top and the bottom of this structure. In another specific embodiment as shown in FIG. 7, the phase change fiber layer 314 is on top and the thermal insulation layer 312 is on bottom, the product type design module 320 further adds the ancillary material 322 to the top and the bottom of this structure at the same time. In another specific embodiment as shown in FIG. 8, a phase change fiber layer 314 is added to the top and the bottom of the thermal insulation layer 312 respectively, and then the product type design module 320 further adds a layer of the ancillary material 322 to cover the phase change fiber layers 314 at the top and the bottom of this structure. FIGS. 4 to 8 are shown for the illustrative purpose only, and the actual material combination structure includes thickness, quantity, and arrangement order.

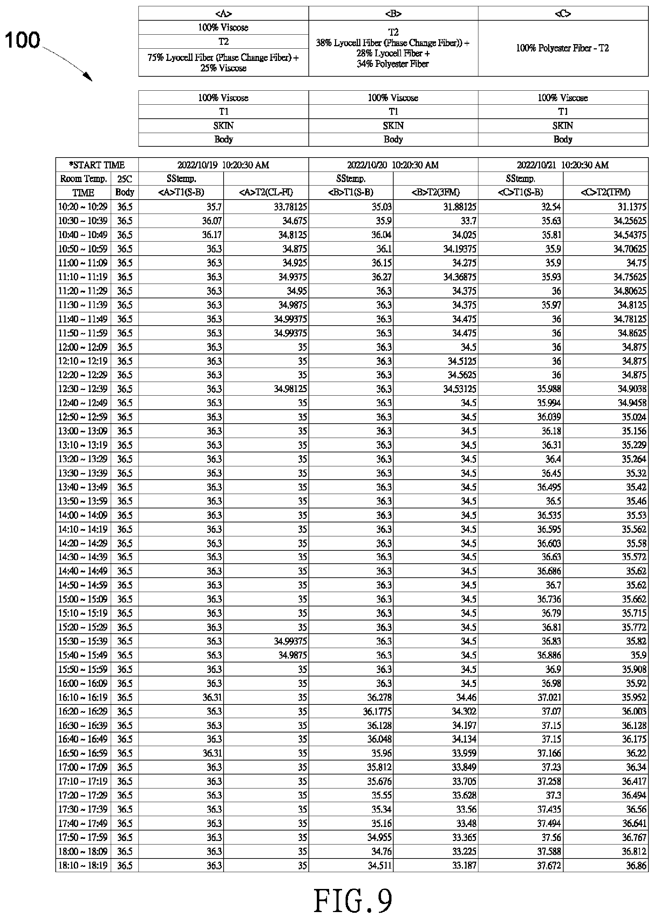

In a specific embodiment, the effect of the present disclosure of an optimal temperature regulating textile system 100 is analyzed and verified. In a constant temperature and humidity environment of 25 degrees Celsius, temperature data are monitored every 10 minutes for 8 hours, and the data and table as shown in FIG. 9 are obtained. Among them, the constant part is the core temperature of the body, which is kept constant at 36.5 degrees Celsius, and three probes are placed on the body: the first probe is used to measure the core temperature of the body; the second probe is placed at the T1 position in the table as shown in FIG. 9 to measure the temperature change between the body surface and the first layer of fabric; and the third probe is placed at the T2 position in the table as shown in FIG. 9 to measure the temperature change of different layers. Wherein, A uses FIG. 6 of the present disclosure as experiment verification: 322 is 100% viscose, 312 is 100% polyester fiber, and 314 is 75% lyocell fiber (phase change fiber) + 25% viscose. B is a general phase change product, and C is a general product.

As for the determining factors of the percentage and material of the phase change fiber layer 314 of A, wherein the phase change fiber layer 314 is 75% lyocell fiber (phase change fiber) + 25% viscose, it is calculated based on the amount of Joules released by the phase change fiber layer 314 per unit weight. Since lyocell fiber releases 90 Joules per gram of unit weight, and based on the following conditions:
1. A constant temperature and humidity environment at a temperature of 25 degrees Celsius.
2. The core temperature of the body is kept constant at 36.5 degrees Celsius.
3. The aforementioned optimal design range of the phase change fiber layer 314 is 10-500gm/sqm.

It is calculated that at least 75% of lyocell fiber is required to maintain the constant temperature effect.

As for the remaining 25% of the material of the phase change fiber layer 314 other than the 75% lyocell fiber, it can be cotton, wool or viscose without affecting the effect thereof, and the phase change fiber layer of A uses viscose as the remaining 25% material of the phase change fiber layer 314.

Through the experimental data as shown in FIG. 9, the optimal temperature regulating textile system 100 of the present disclosure has been successfully verified through the combination A, and it has the effect of keeping a constant temperature for 8 hours of continuous use.

The optimal temperature regulating textile system 100 of the present disclosure can further have the following applications:
1. Natural fiber: It can be used as a building material for the optimal temperature regulating textile structure 100 of the present disclosure:
   The fiber material as shown in FIG. 1 can be natural fibers used as the building material of the optimal temperature regulating material combination structure. The thermal insulation layer in the product design module 300 and the thermal insulation layer 312 of the phase change fiber layer structure design module 310 can be natural fibers including wool, down, etc. used as the building material of the thermal insulation layer 312.
2. Optimal temperature regulating textile structure designed for regulating the optimal temperature for human body:
   The present disclosure can be achieved by adjusting the thickness of the phase change fiber layer 314 correspondingly to reach the most suitable temperature of the human body, and each product can be calculated to have the best phase change exothermic and endothermic performance under different usage environments and scenarios and maintain the most suitable temperature of the human body.
3. Applications of thermal insulation products for thermos items and appliances:
   The present disclosure achieves the optimal temperate regulation by the combination design of the thermal insulation layer 312 and the phase change fiber layer 314, so that it can also be applied to the inner layer/outer layer design of a thermal insulation apparatus (such as a thermos flask, a thermos cup, etc.). By using the thermal insulation layer of the present disclosure as the two-layer design of the cup body of the traditional thermal insulation apparatus, adding a phase change fiber layer in the middle, and calculating the Joules of the required phase change fiber layer, we can create a long-lasting and durable thermal insulation product that can maintain optimal temperature for a long time
4. Applications for the product design for extreme environments:
   The present disclosure bases on the arrangement order and thickness design of the thermal insulation layer 312 and the phase change fiber layer 314 to adjust the thickness of the thermal insulation layer 312 in response to the external temperature of the usage situation, and to adjust the thickness of the phase change fiber layer 314 according to the thermal energy requirement demand in response to the internal temperature, so that a fiber material combination structure that meets the Joules required by the extreme environment and a textile structure and a product type design that can adjust the optimal temperature (such as: the arrangement and thickness design of a thermal insulation layer used in extremely low temperature and extremely high temperature environments) 312, and the phase change fiber layer 314 and the thermal clothing, sleeping bags and other products made from the above) can be produced.

In summation of the description above, the present disclosure uses the structural combination design of the thermal insulation layer 312 and the phase change fiber layer 314 to select a fiber containing the corresponding appropriate phase change material as the temperature regulating layer material for the temperature requirement of the target effect, and calculates the number of phase change fibers required for the temperature regulating layer and the number of temperature regulating layers according to the temperature regulating requirement for the target effect to optimize the combination of the thermal insulation layer, so as to completely isolate the external and internal temperature, to allow phase change temperature regulating energy of the phase change fiber layer to be effective on the internal temperature regulation, and to ensure the continuous optimal temperature regulation.

While the above describes the specific embodiments of the present disclosure, it is understood that the scope of the disclosure is not limited thereto, and any person skilled having ordinary skills in the art can readily think of changes or substitutions within the scope of the technology disclosed in the present disclosure shall be covered by the scope of the disclosure as defined in the appended claims.

In the description of the present disclosure, it is to be understood that the terms "top", "bottom", "inside", "outside", etc., are not intended to indicate or imply a particular orientation or a particular position based on the orientation or positional relationship shown in the accompanying drawings. These terms are used to indicate orientations or positional relationships based on those shown in the accompanying drawings, and are intended only to facilitate and simplify the description of the present application. The terms do not indicate or imply that the device or element referred to must have a particular orientation, be constructed and operated in a particular orientation, and therefore are not to be construed as a limitation of the present disclosure. The wording 'includes' does not exclude the presence of elements or steps not listed in the claims. The wording 'one' or 'a' preceding an element does not exclude the existence of a plurality of such elements. The simple fact that certain measures are documented in mutually distinct dependent claims does not indicate that a combination of these measures cannot be used in the improvement. Any reference symbols in the claims should not be construed as limiting the scope of the present disclosure.

## Claims

1. An optimal temperature regulating textile system, **characterized by** comprising: a target effect establishment module and a product design module, the target effect establishment module being used for providing at least one condition of a target effect, the product design module selecting at least one kind of fiber materials according to the at least one condition of the target effect to produce an optimal temperature regulation fiber material combination structure; wherein the at least one condition of the target effect comprises a target temperature regulation, an effect duration regulation, and applied products and scenarios; wherein the product design module comprises a thermal insulation layer and phase change fiber layer structure design module and a product type design module, the thermal insulation layer and phase change fiber layer structure design module is used for performing at least one parameter design for the thermal insulation layer and the phase change fiber layer, the product type design module is used for combining the design of the thermal insulation layer and phase change fiber layer structure design module with at least one layer of ancillary material.

2. The optimal temperature regulating textile system according to claim 1, **characterized in that** the optimal temperature regulation fiber material combination structure corresponds to the set of product types applied, and the environment, scenarios and corresponding products to which the product type is applied include home, clothing and office products as well as products used or worn within the environment and scenarios.

3. The optimal temperature regulating textile system according to claim 1, **characterized in that** the thermal insulation layer is used for keeping warm or cold and comprises a fiber, the fiber comprises polyester, wool or down; the phase change fiber layer is a temperature regulating layer used for performing endothermic and exothermic operations and comprises a phase change material, and the phase change material comprises grease and paraffin.

4. The optimal temperature regulating textile system according to claim 1, **characterized in that** the parameter comprises a mutual arrangement order, a structure or a thickness of the thermal insulation layer and the phase change fiber layer.

5. The optimal temperature regulating textile system according to claim 4, **characterized in that** the mutual arrangement order of the thermal insulation layer and the phase change fiber layer is that the thermal insulation layer is on top and the phase change fiber layer is on bottom.

6. The optimal temperature regulating textile system according to claim 4, **characterized in that** the mutual arrangement order of the thermal insulation layer and the phase change fiber layer is that the phase change fiber layer is on top and the thermal insulation layer is on bottom.

7. The optimal temperature regulating textile system according to claim 4, **characterized in that** the mutual arrangement order of the thermal insulation layer and the phase change fiber layer is that one phase change fiber layer is arranged on the top and on the bottom of the thermal insulation layer respectively.

8. The optimal temperature regulating textile system according to any one of claims 5 and 6, **characterized in that** the product type design module adds a layer of the ancillary material on the top of the structure designed by the thermal insulation layer and phase change fiber layer structure design module.

9. The optimal temperature regulating textile system according to any one of claims 5 to 7, **characterized in that** the product type design module simultaneously adds the ancillary material on the top and on the bottom of the structure designed by the thermal insulation layer and phase change fiber layer structure design module.

10. The optimal temperature regulating textile system according to claim 1, **characterized in that** the design range of the thermal insulation layer and the phase change fiber layer is 10-500 gm/sqm.
